# EUROPÄISCHE PATENTSCHRIFT

(11) **EP 1 216 958 B1**
(45) Veröffentlichungstag und Bekanntmachung des Hinweises auf die Patenterteilung: **20.07.2005**
(21) Anmeldenummer: 01130752.7
(22) Anmeldetag: 21.12.2001
(51) Int. Cl.: C01B 33/141, C09G 1/02, D21H 19/40, C03C 17/25

(54) **Wässrige Dispersion, Verfahren zu deren Herstellung und Verwendung**
Method for production of aqueous dispersion and use thereof
Dispersion aqueuse, son procédé de préparation et son utilisation

(30) Priorität: 23.12.2000 DE 10065027
(43) Veröffentlichungstag der Anmeldung: 26.06.2002
(73) Patentinhaber: Degussa AG, 40474 Düsseldorf (DE)
(72) Erfinder: Mangold, Helmut, Dr., 63517 Rodenbach (DE); Lortz, Wolfgang, Dr., 63454 Wächtersbach (DE); Batz-Sohn, Christoph, Dr., 63454 Hanau (DE); Perlet, Gabriele, 63538 Grosskrotzenburg (DE); Will, Werner, 63571 Gehnhausen (DE)

(56) Entgegenhaltungen:
- EP-A- 0 850 876
- EP-A- 0 876 841
- EP-A- 1 148 026
- CH-A- 536 259
- FR-A- 2 094 790

## Beschreibung

Die Erfindung betrifft die Herstellung wäßriger Dispersionen, die pyrogen hergestelltes Siliziumdioxid enthalten, ein Verfahren zur Herstellung und die Verwendung der Dispersionen zum Polieren von Halbleitersubstraten.

Siliziumdioxid enthaltende wäßrige Dispersionen finden einen breiten Anwendungsbereich. Die Anwendungen umfassen zum Beispiel das Coating von Papier, die Herstellung von Glasfasern und Quarzglas, sowie das chemisch-mechanische Polieren von Halbleitersubstraten (CMP-Prozeß).

Übliche Dispersionen gehen entweder von kolloidalem Siliziumdioxid, den Kiesel-Solen, aus oder von pyrogen hergestelltem Siliziumdioxid.

Kolloidales Siliziumdioxid wird in der Lösung aus Natriumsilikat erzeugt und liefert Dispersionen mit sehr kleiner Teilchengröße und sehr guter Dispersionsstabilität. Nachteilig, besonders beim Polieren von Halbleitersubstraten, ist der Anteil an Verunreinigungen, eingebracht durch das Ausgangsmaterial Natriumsilikat, sowie das Anhaften der Teilchen auf polierten Oberflächen.

Pyrogenes Siliziumdioxid, hergestellt durch Flammenoxidation beziehungsweise Flammenhydrolyse aus Siliziumtetrachlorid, Wasserstoff und Sauerstoff, dagegen zeigt eine sehr hohe Reinheit und eine dem kolloidalen Siliziumdioxid vergleichbare Primärteilchengröße. Diese Primärteilchen aggregieren und agglomerieren jedoch, wobei harte Partikel entstehen. Die Dispergierung der Aggregate und Agglomerate erweist sich als schwierig, die Dispersionen sind weniger stabil und neigen zur Sedimentation oder auch zum Gelieren.

Eine Möglichkeit die Stabilität der Dispersion zu erhöhen wird in US 5 116 535 und US 5 246 624 beschrieben. Besonderes Merkmal ist die BET-Oberfläche, die nicht größer als 75 m²/g, bevorzugt zwischen 30 und 60 m²/g, sein sollte. Aber auch hier ist wie in US 5 904 159 beschrieben nur ein geringfügig bessere Stabilität zu erwarten. Bereits nach zwei Monaten tritt Sedimentation ein.

In US 5 904 159 wird eine wäßrige Dispersion enthaltend pyrogen hergestelltes Siliziumdioxid beschrieben, die eine verbesserte Stabilität aufweist. Dies wird durch eine besondere Form der Dispergierung erreicht. Die Verwendung eines Hochdruck-Homogenisators erlaubt die Herstellung wässeriger Siliziumdioxid-Dispersionen mit durchschnittlichen Partikeldurchmessern von 30 bis 100 nm, die, mehrere Monate stabil sein soll, ohne daß eine Sedimentation eintritt.

Eine ähnliche Form der Dispergierung wird auch in EP-A-876 841 beschrieben. Die mittlere Partikelgröße der beanspruchten, pyrogen hergestellten Metalloxide wird hier mit 10 nm bis 2 µm angegeben, die Stabilität in den Ausführungsbeispielen mit mindestens 30 Tagen aufgeführt.

Diese Dispergierung wird ebenfalls in WO 00/17282 A1 für Siliziumdioxid, Ceroxid und Zirkonoxid beansprucht, mit Partikelgrößen zwischen 30 und 500 nm. Es werden keine Hinweise auf die Stabilität der Dispersion gegeben.

Trotz dieser verbesserten Stabilität der wäßrigen Dispersionen, bleibt das Reagglomerationsverhalten der dispergierten Siliziumdioxidteilchen, das die Stabilität der Dispersion begrenzt und zu Kratzern beim Polieren von Oberflächen im CMP-Prozeß führt.

Aufgabe der vorliegenden Erfindung war es daher, eine wäßrige Dispersion bereitzustellen, die pyrogen hergestelltes Siliziumdioxid enthält, jedoch ein gegenüber dem Stand der Technik deutlich vermindertes Reagglomerationsverhalten, eine höhere Stabilität aufweist und die beim chemisch-mechanischen Polieren hohe Abtragsraten liefert und zu einer Oberfläche führt, die weitestgehend frei von Mikrokratzern ist.

Die technische Aufgabe wird gelöst durch eine wäßrige Dispersion, enthaltend ein mittels Aerosol hergestelltes alkali-dotiertes, pyrogenes Siliziumdioxid, dadurch gekennzeichnet, dass dieses in der Dispersion einen durchschnittlichen Teilchendurchmesser der Sekundärteilchen von kleiner als 100 nm aufweist und der Quotient dₙ/dₐ aus dem arithmetischen Mittel der Anzahlverteilung dₙ und dem arithmetischen Mittel der Oberflächenverteilung dₐ der Primärteilchen mindestens 0,7 ist.

Die Begriffe Primär- und Sekundärteilchen rühren von der pyrogenen Herstellung des alkali-dotierten Siliziumdioxides her. In einem pyrogenen Prozess zur Herstellung von dotiertem und nicht dotiertem Siliziumdioxid werden zunächst sogenannte Primärpartikel mit einer Größe geformt, die abhängig von den gewählten Reaktionsparametern ist, und die ca. zwischen 5 und 40 nm liegt. Die Größe dieser Primärpartikel kann zum Beispiel durch TEM-Aufnahmen bestimmt werden. Die Primärpartikel liegen jedoch nicht isoliert vor, sondern verwachsen zu Aggregaten, bzw. lageren sich zu Agglomeraten zusammen, die im folgenden als Sekundärteilchen beschrieben werden.

Der Quotient dₙ/dₐ bei den alkali-dotierten Siliziumdioxiden von mindestens 0,7 beschreibt eine deutlich engere Teilchengrößenverteilung als bei einem undotierten, pyrogen hergestellten Siliziumdioxid. Der Quotient dₙ/dₐ liegt bei einem pyrogen hergestellten Siliziumdioxid mit einer BET-Oberfläche von 130 m²/g (Aerosil 130, Fa. Degussa AG) bei 0,52.

Diese Dispersion weist eine höhere Stabilität auf, als eine nach dem Stand der Technik hergestellte vergleichbare, jedoch ohne Alkalioxid-Dotierung. Höhere Stabilität der dotierten Dispersion heißt, daß der Zeitpunkt an dem die Dispersion in ihrer Viskosität zunimmt, geliert oder sedimentiert später eintritt als bei Dispersionen mit nicht dotiertem Siliziumdioxid.

Ferner zeigte sich, daß die Zeit zur Einarbeitung des alkali-dotierten, pyrogen hergestellten Siliziumdioxides kürzer ist als ohne Dotierung.

Dieses Ergebnis ist deshalb überraschend, da wäßrige Dispersionen, die pyrogen hergestelltes Siliziumdioxid enthalten, nach dem Stand der Technik ohnehin durch Zugabe von Alkali oder eines anderen basischen Stoffes, stabilisiert werden können. Kalium-dotiertes Siliziumdioxid weist gegenüber nicht dotiertem eine modifizierte Aggregatbeziehungsweise Agglomeratstruktur auf. Die Dotierungssubstanz ist homogen eingebaut, das heißt das Alkali befindet sich sowohl innerhalb des Korns wie auch auf der Oberfläche. Eine Dispersion, die alkali-dotiertes Siliziumdioxid und Alkali enthält, unterscheidet sich dadurch eindeutig von einer, die nicht dotiertes Siliziumdioxid und Alkali enthält. Dieser unterschiedliche Aufbau führt beim alkali-dotierten Siliziumdioxid zu einem rascheren Einarbeiten, zu einer geringeren Reagglomerationstendenz und damit zu einer höheren Stabilität der wässerigen Dispersion.

Bei mittels Aerosol dotiertem, pyrogen hergestelltem Siliziumdioxid wird in die Flamme, wie sie in bekannter Weise zur Herstellung von pyrogenen Oxiden mittels Flammenhydrolyse Verwendung findet, die Dotierungskomponente in Form eines Aerosols eingespeist, zum Beispiel in Form einer wäßrigen Lösung von Alkalichloriden. Dieses Verfahren wird in DE-A-196 50 500 beschrieben. Das Aerosol wird vor der Reaktion mit dem Gasgemisch der Flammenoxidation beziehungsweise Flammenhydrolyse, Siliziumtetrachlorid, Wasserstoff und Sauerstoff, homogen gemischt. Man läßt das Aerosol-Gasgemisch in einer Flamme abreagieren und das entstandene pyrogen hergestellte, dotierte Siliziumdioxid wird in bekannter Weise vom Gasstrom abgetrennt. Als Ausgangsprodukt des Aerosols dient eine Salzlösung oder Suspension, die die Komponente der dotierenden Substanz enthält. Während der Genese des pyrogenen Oxides liegt das Dotierungsmedium feinverteilt in der Gasphase vor, sodaß ein homogener Einbau der Dotierungskomponente in das pyrogen hergestellte Siliziumdioxid möglich ist. Damit wird auch die Aggregat- beziehungsweise Agglomeratstruktur des pyrogenen Siliziumdioxides beeinflußt.

Der Dotierungsgrad kann bei nach obigem Verfahren hergestelltem Siliziumdioxid in weiten Grenzen variiert werden, von 0,00001 bis 20 Gew.-%. Bei Verwendung zur Herstellung einer wäßrigen Dispersion gemäß der vorliegenden Erfindung liegt der Dotierungsgrad bevorzugt zwischen 10 ppm und 10 Gew.-%, besonders bevorzugt ist der Bereich zwischen 300 ppm und 2 Gew.-%.

Die BET-Oberfläche des alkali-dotierten Siliziumdioxides liegt in einer bevorzugten Ausführungsform der Erfindung zwischen 5 und 600 m²/g. Besonders bevorzugt ist ein Bereich zwischen 50 und 400 m²/g, in dem die Dispersion eine gute Stabilität aufweist und die Herstellung des alkali-dotierten Siliziumdioxides technisch einfach zu realisieren ist.

Der Feststoffgehalt der alkali-dotierten Siliziumdioxid enthaltenden Dispersion richtet sich in erster Linie nach der beabsichtigten Verwendung. Um Transportkosten einzusparen wird man eine Dispersion mit möglichst hohem Feststoffgehalt anstreben, während bei bestimmten Anwendungen, wie zum Beispiel beim Polieren von Siliziumscheiben Dispersionen mit niedrigen Feststoffgehalten eingesetzt werden. Bevorzugt gemäß der Erfindung ist der Bereich von 0,1 bis 70 Gew.-%., besonders bevorzugt der Bereich zwischen 1 und 30 Gew.-%. In diesen Bereichen zeigt die alkali-dotierte Dispersion eine gute Stabilität.

Durch die Dotierung des Siliziumdioxides mit Alkali ist der pH-Wert der Dispersion höher als bei einer nicht dotierten, je nach Dotierungsgrad zwischen ca. 5 und 8 (pH-Wert der vierprozentigen Dispersion). Die Dispersion kann als solche eingesetzt werden, zum Beispiel zum Polieren. Wie bei nicht dotiertes Siliziumdioxid enthaltenden Dispersionen gilt jedoch auch hier, daß die Viskosität in einem pH-Bereich von sauer bis schwach alkalisch deutlich erhöht ist. Gemäß einer bevorzugten Ausführungsform der Erfindung wird der pH-Wert der Dispersion durch Zugabe von Alkalihydroxiden oder Aminen, besonders bevorzugt sind Kaliumhydroxid und Ammoniak beziehungsweise Ammoniumhydroxid, auf einen Wert von 8 bis 12 eingestellt. Dies führt zu einer deutlichen Stabilisierung der Dispersion Kondensationsreaktionen des Siliziumdioxides werden dadurch vermieden.

Gemäß DE-A-196 50 500 eignen sich alle Alkalimetalle zur Dotierung von Siliziumdioxid, hergestellt durch Flammenoxidation beziehungsweise Flammenhydrolyse. Besonders bevorzugt ist jedoch die Dotierung mit Kalium. Bei der Verwendung von Kaliumsalzen als Dotierkomponente verändert sich die Struktur, das heißt der Verwachsungsgrad und auch die Morphologie (das heißt das Erscheinungsbild), der Primärteilchen entscheidend. Diese Veränderung der Morphologie setzt bei Kalium-dotiertem Siliziumdioxid bei einem Kaliumgehalt von mehr als 300 ppm ein.

Die so mit Kalium-dotierten pyrogenen Oxide weisen überraschenderweise im elektronenmikroskopischen Bild, sphärische runde Primärpartikel auf, die nur sehr wenig verwachsen sind, was sich auch darin äußert, dass bei einer Strukturbestimmung nach der Dibutylphthalatmethode (DBP-Methode) kein Endpunkt erkennbar ist. Das Kalium ist bei den dotierten pyrogen Oxiden gleichmäßig verteilt.Es ist auf den elektronenmikroskopischen Aufnahmen nicht zu erkennen.

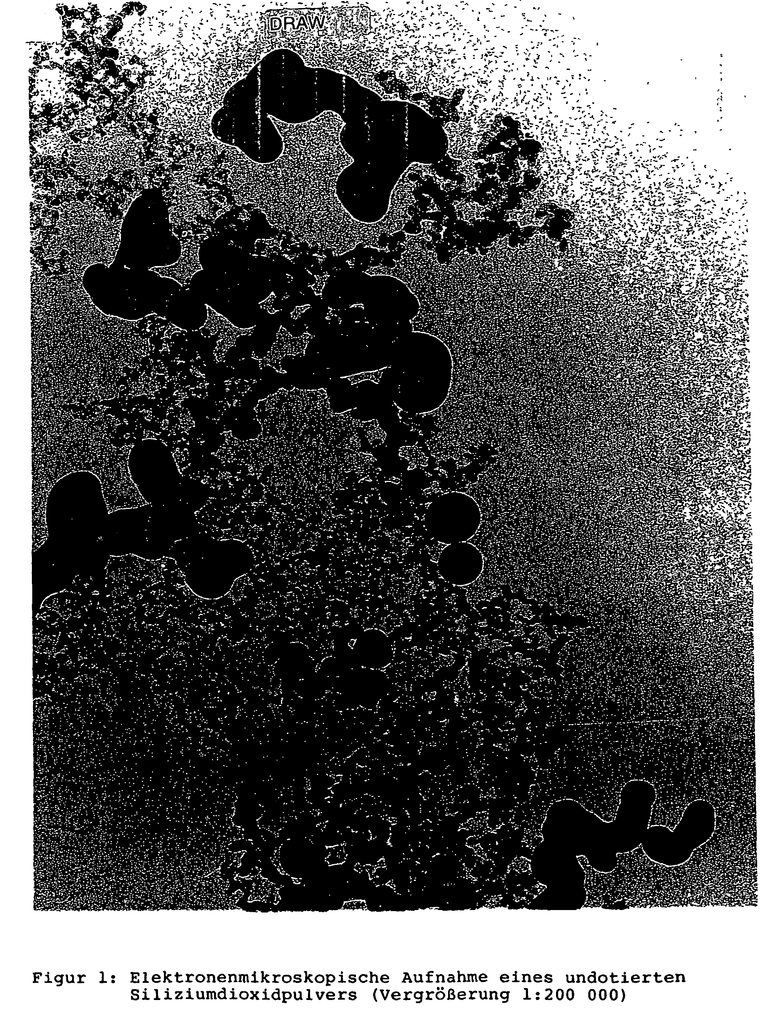

Figur 1 zeigt eine EM-Aufnahme eines pyrogen hergestellten Siliziumdioxides ohne Dotierung (Aerosil 130, Fa. Degussa).

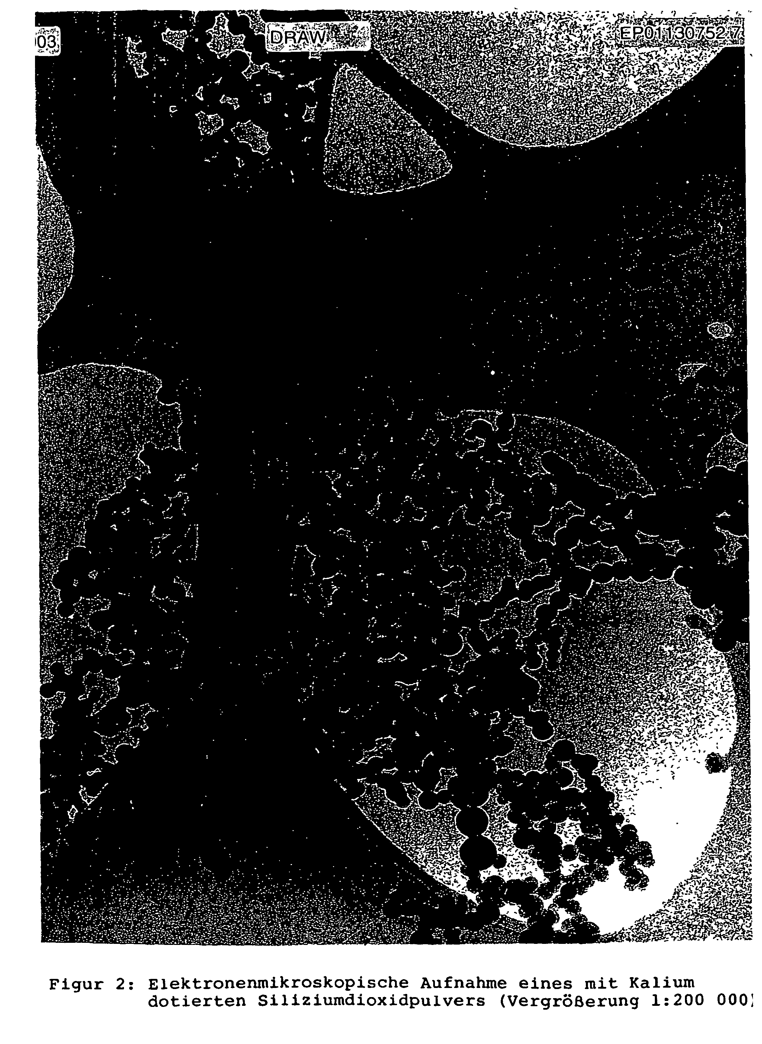

Figur 2 zeigt eine EM-Aufnahme eines mit 0,44 Gew.-% Kalium-dotiertem pyrogen hergestelltem Siliziumdioxides mit einer spezifischen Oberfläche (BET) von 131 g/m².

Ein weiterer Gegenstand der Erfindung ist ein Verfahren zur Herstellung der Dispersion enthaltend alkali-dotiertes Siliziumdioxid. Hierzu eignen sich Dispergiermethoden, bei denen ein ausreichend hoher Energieeintrag eine Dispergierung auch sehr harter und stark aggregierter Materialien ermöglicht. Hierzu zählen Systeme nach dem Rotor-Stator-Prinzip, zum Beispiel Ultra-Turrax-Maschinen, oder Rührwerkskugelmühlen. Höhere Energieeinträge sind mit einem Planetenkneter/-mixer möglich. Die Wirksamkeit dieses Systems ist jedoch mit einer ausreichend hohen Viskosität der bearbeiteten Mischung verbunden, um die benötigten hohen Scherenergien zum Zerteilen der Teilchen einzubringen.

Beim Vermahlen und Dispergieren dotierter Oxidpartikel besteht die Gefahr, daß der Dotierungsstoff während des Vermahlens und Dispergierens abgelöst wird. Dies führt, wenn die Dispersion beim CMP-Prozeß als Poliermittel eingesetzt werden soll, zu uneinheitlichen Polierergebnissen.

Es wurde nun gefunden, daß mit Hochdruckhomogenisierern, nachfolgend auch wet-jet-mill genannt, wäßrige Dispersionen erhalten werden können, die alkali-dotierte Siliziumdioxidteilchen enthalten, die kleiner als 100 nm sind und bei denen der Dotierstoff nicht abgelöst wird.

Bei diesen Vorrichtungen werden zwei unter einem Druck von bis zu 3500 kg/cm² stehende vordispergierte Suspensionsströme über eine Düse entspannt. Beide Dispersionsstrahlen treffen exakt aufeinander und die Teilchen mahlen sich selbst. Bei einer anderen Ausführungsform wird die Vordispersion ebenfalls unter hohen Druck gesetzt, jedoch erfolgt die Kollision der Teilchen gegen gepanzerte Wandbereiche.

Diese Vorrichtungen wurden bislang nur zur Dispergierung von nicht dotierten Oxiden, wie Zinkoxid, Siliziumdioxid, Aluminiumoxid (UK-A-2 063 695, EP-A-876 841, EP-A-773 270, WO 00/172 282 A1) verwendet. Die Vermahlung und Dispergierung von dotierten Oxiden mit diesen Vorrichtungen ist bislang nicht beschrieben.

Ein weiterer Gegenstand der Erfindung ist die Verwendung der wäßrigen Dispersion von alkali-dotiertem Siliziumdioxid zum Planarisieren von Halbleitersubstraten oder von auf ihnen aufgebrachten Schichten. Mit der Dispersion von alkali-dotiertem Siliziumdioxid kann bei einer hohen Polierrate eine mikrokratzerfreie Oberfläche erzielt werden. Ferner eignen sich diese Dispersionen zur Herstellung sehr feinteiliger Oberflächenbeschichtungen im Papierbereich, oder als Rohstoff im Kosmetik- und Glasbereich.

### Beispiele

### Analysenverfahren

Die Teilchengrößenverteilung dₙ/dₐ der Primärpartikel im Feststoff wird bestimmt durch Auszählen der Teilchen aus den EM-Aufnahmen.

Die durchschnittliche Sekundärteilchengröße in der Dispersion wurde mit dem Zetasizer 3000 Hsa der Firma Malvern bestimmt.

Die Oberfläche der eingesetzten Pulver wurde nach der Methode von S. Brunauer, P. H. Emmet und I. Teller, J. Am. Chemical Society, Band 60, Seite 309 (1938) ermittelt und wird allgemein als BET-Oberfläche bezeichnet.

Die Viskosität der erzeugten Dispersionen wurde mit einem Rotations-Rheometer der Firma Physica Model MCR 300 und dem Meßbecher CC 27 ermittelt. Der Viskositätswert wurde bei einer Schergeschwindigkeit von 500 1/sec. ermittelt. Diese Schergeschwindigkeit liegt in einem Bereich, in dem die Viskosität praktisch unabhängig von der Scherbeanspruchung ist.

Die Beurteilung einer Bodensatzbildung erfolgte durch visuelle Beurteilung in einer 1000 ml Weithals-Polyethylen-Flasche nach einer Standzeit von einer Woche. Durch vorsichtiges Kippen der Flasche kann leicht ein gegebenenfalls vorhandener Bodensatz erkannt werden.

Die Synthese der Kalium-dotierten Siliziumdioxidpartikel erfolgt gemäß DE-A-196 50 500.

### Herstellung von Kalium-dotiertem Siliziumdioxid (K-Gehalt 0,44 Gew.%, als K₂O)

4,44 kg/h SiCl₄ werden bei ca. 130 °C verdampft und in das Zentralrohr des Brenners bekannter Bauart gemäß DE 196 50 500 A1 überführt. In dieses Rohr werden zusätzlich 4,7 Nm³/h Wasserstoff sowie 3,7 Nm³/h Primärluft und 1,15 Nm³/h Sauerstoff eingespeist. Dieses Gasgemisch strömt aus der inneren Brennerdüse und brennt in den Brennerraum des wassergekühlten Flammrohres.

In die Manteldüse, die die Zentraldüse umgibt, werden zur Vermeidung von Anbackungen zusätzlich 0,5 Nm³/h (Sekundär-) Wasserstoff und 0,3 Nm³/h Stickstoff eingespeist.

Aus der Umgebung werden noch ca. 10 Nm³/h Luft in das unter leichtem Unterdruck stehende Flammrohr eingesaugt. (Offene Brennerfahrweise).

Die zweite Gaskomponente, die in das Axialrohr eingegeben wird, besteht aus einem Aerosol, das aus einer 12,55 prozentigen wäßrigen Kaliumchloridlösung erzeugt wird. Als Aerosolgenerator dienen dabei 2 Zweistoffdüsen, die eine Vernebelungsleistung von 255 g/h Aerosol erbringen. Dieses wäßrige Salz-Aerosol wird mittels 2 Nm³/h Tragluft durch von außen geheizte Leitungen geführt und verläßt die innere Düse mit einer Austrittstemperatur von ca. 180 °C. Das Aerosol wird in die Flamme eingebracht.

Nach der Flammenhydrolyse werden in bekannter Art die Reaktionsgase und das entstandene Kalium-dotierte Siliziumdioxid durch Anlegen eines Unterdruckes durch ein Kühlsystem gesaugt und dabei der Partikel-Gasstrom auf ca. 100 bis 160 °C abgekühlt. In einem Filter oder Zyklon wird der Feststoff von dem Abgasstrom abgetrennt.

Das Kalium-dotierte Siliziumdioxid fällt dabei als weißes feinteiliges Pulver an. In einem weiteren Schritt werden bei erhöhter Temperatur durch Behandlung mit wasserdampfhaltiger Luft noch anhaftende Salzsäurereste entfernt.

Die analytischen Daten der so hergestellten Kalium-dotierten Siliziumdioxide sind in Tabelle 1 widergegeben.

**Tabelle 1:**

| **Analytische Daten der Kalium-dotierten Siliziumdioxide** | | | |
|---|---|---|---|
| Nr. | BET m² / g | Kaliumgehalt Gew.-% (als K₂O) | Primärpartikel Größenverteilung dₙ/dₐ |
| 1 | 131 | 0,44 | 0,84 |
| 2 | 121 | 0,49 | 0,81 |
| 3 | 104 | 0,12 | 0,78 |
| 4 | 113 | 0,24 | 0,80 |
| 5 | 120 | 0,69 | 0,86 |
| 6 | 117 | 1,18 | 0,84 |

### Herstellung der Dispersionen

**Methode A:** In einem 60 l Edelstahl-Ansatzbehälter werden 36 kg VE-Wasser und 104 g 30%ige KOH-Lösung vorgelegt. Mit Hilfe eines Dispergier- und Saugmischers der Firma Ystrahl (bei 4500 UpM) werden 16,5 kg des oben hergestellten, mit 0,44 Gew.% Kalium-dotierten Siliziumdioxid eingesaugt und grob vordispergiert. Diese Vordispergierung wird durch einen Rotor/Stator Durchlaufhomogenisator Typ Z 66 der Firma Ystral mit vier Bearbeitungskränzen, einer Statorschlitzbreite von 1 mm und einer Drehzahl von 3000 UpM unterstützt. Nach dem Pulvereintrag wird die Dispergierung mit dem Rotor/Stator Durchlaufhomogenisator Typ Z 66 der Firma Ystral bei einer Drehzahl von 11 500 UpM vervollständigt. Nach dem Pulvereintrag wird die Dispergierung mit einem Rotor/Stator Durchlaufhomogenisator Typ Z 66 der Firma Ystral mit vier Bearbeitungskränzen, einer Statorschlitzbreite von 1 mm und einer Drehzahl von 11 500 UpM vervollständigt. Während dieser 15 minütigen Dispergierung mit 11 500 UpM wird der pH-Wert durch Zugabe von weiterer KOH-Lösung auf einen pH-Wert von 10,5 eingestellt und gehalten. Hierbei wurden weitere 779 g KOH-Lösung verwendet und durch Zugabe von 1,5 kg Wasser eine Feststoffkonzentration von 30 Gew. % eingestellt.

Anstelle des Kalium-dotierten Siliziumdioxides wird die Dispergierung nach Methode A auch für Aerosil 130 (BET-Oberfläche 130 m2/g), der Fa. Degussa AG durchgeführt.

**Methode B:** Ca. die Hälfte der nach Methode A erhaltenen Dispersionen werden mit einer "Wet-Jet-Mill", Ultimaizer System der Firma Sugino Machine Ltd., Modell HJP-25050, bei einem Druck von 250 MPa und einem Diamantdüsendurchmesser von 0,3 mm und zwei Mahl-Durchgängen vermahlen.

Insgesamt werden drei Dispersionen für Polierzwecke bereit gestellt:
Dispersion 1: mit 0,44 Gew.% Kalium-dotiertes Siliziumdioxid, dispergiert nach Methode B; Feststoffgehalt 30 Gew.%, pH-Wert 10,5.
Dispersion 2: mit 0,44 Gew.% Kalium-dotiertes Siliziumdioxid, dispergiert nach Methode A; Feststoffgehalt 30 Gew.%, pH-Wert 10,5.
Dispersion 3: Aerosil 130, Degussa AG, ohne K-Dotierung; dispergiert nach Methode B Feststoffgehalt 30 Gew.%, pH-Wert 10,5.

Dispersion 2, hergestellt mittels Methode A, zeigt gegenüber den Dispersionen 1 und 3, die mittels Methode B hergestellt, wurden eine deutlich erhöhte Viskosiät und die Bildung von Bodensatz.

Weitere analytische Daten dieser Dispersionen sind in Tabelle 2 aufgeführt.

**Tabelle 2:**

| **Analytische Daten der Dispersionen 1 bis 3** | | | | |
|---|---|---|---|---|
| | arithmetisch gemittelter Sekundärteilchen-Durchmesser in der Dispersion | | | |
| Disp. | Anzahl [nm] | Volumen [nm] | Viskosität⁽¹⁾ [mPas] | Bodensatz |
| 1 | 49 | 71 | 7,5 | nein |
| 2 | 77 | 142 | 50 | ja |
| 3 | 100 | 140 | 15 | nein |

| | | | | |
|---|---|---|---|---|
| (1) bei 500 1/sec | | | | |

Die Teilchengrößenverteilung der Primärpartikel ändert sich durch die Dispergierung nicht.

Einarbeitung in Dispersion/Benetzbarkeit: Bei der Einarbeitung von Kalium-dotiertem Siliziumdoxid und Aerosil 130 zeigen sich starke Handhabungsunterschiede. Mit dem Dispergier- und Saugmischer der Firma Ystrahl konnte das Kalium-dotierten Material innerhalb von 1,5 h eingearbeitet werden. Für die Einarbeitung der Aerosil 130 Menge wurden 2,5 h benötigt.

Desweiteren konnte nicht die gesamte Menge nur mit dem Rotor/Stator Durchlaufhomogenisator Typ Z 66 der Firma Ystral vordispergiert werden. Ab einer Konzentration von ca. 20 Gew. % war auf Grund einer hohen Viskosität, verursacht durch partielle Reagglomeration, kein weiteres Einsaugen von Aerosil 130 mehr möglich. Dieses Verhalten ist bei Kalium-dotierten Siliziumdioxid-Dispersionen deutlich geringer ausgeprägt. Erst durch Unterstützung mit Hilfe der im Kreislauf betriebenen "Wet-Jet-Mill" bei 75 Mpa konnte die Viskosität wieder soweit abgesenkt werden, daß weiteres Aerosil 130 Material eingearbeitet werden konnte.

Die unterschiedliche Einarbeitungsgeschwindigkeit kann möglicherweise auf ein unterschiedliches Benetzungsverhalten zurückgeführt werden.

Hierzu wird eine Menge von 5-10 mg der entsprechenden Probe vorsichtig auf die Oberfläche eines bis zu einer Höhe von 6 cm mit bidestilliertem Wasser gefüllten Probengläschen gegeben, wobei darauf geachtet wird, dass kein Kontakt zwischen Probensubstanz und der Glaswand des Gefäßes besteht. Zur Bestimmung der Benetzungsgeschwindigkeit wird die Zeit bis zum vollständigen Absinken der Probe gemessen. Der Versuch wird jeweils dreimal wiederholt.

Es wurde beobachtet, daß alle Proben sofort, nachdem sie auf die Wasseroberfläche gegeben wurden, durchfeuchtet wurden. Als vollständige Benetzung wird die Zeit betrachtet bis die Probe soweit mit Wasser in Kontakt gekommen ist, dass sie sich von der Wasseroberfläche löst und zu Boden sinkt.

Die Benetzungszeiten von Kalium-dotiertem Siliziumdioxid variieren mit der Kalium-Dotierung. Sie sind wesentlich kürzer als für nicht dotiertes Siliziumdioxid (Aerosil 130) (Tabelle 3).

**Tabelle 3:**

| **Benetzungszeiten von Kalium-dotiertem Siliziumdioxid**^{**(1)**} | | | | | | |
|---|---|---|---|---|---|---|
| Gew.-% K (als K₂O) | 0,12 | 0,24 | 0,44 | 0,69 | 1,18 | 0⁽²⁾ |
| Benetzungszeit (s) | 31 | 31 | 39 | 39 | 43 | 120 |

| | | | | | | |
|---|---|---|---|---|---|---|
| (1) Mittelwert aus 3 Messungen; (2) Aerosil 130 | | | | | | |

### Polierprozeß

**Eingesetzte Dispersionen:** Neben den Dispersionen 1 bis 3 werden auch folgende kommerziell erhältlichen Dispersionen zum Polieren eingesetzt:
Klebosol 30N50 (Fa. Rodel), Feststoffgehalt 30 Gew.%, stabilisiert mit Ammoniak, pH 9,5
Klebosol 1501 (Fa. Rodel), Feststoffgehalt 30 Gew.%, stabilisiert mit KOH, pH 10,9
Semi-Sperse 25 (Cabot Microelectronics), Feststoffgehalt 25 Gew.%, KOH stabilisiert, pH 11,0, mit Wasser 1:1 verdünnt.

**Ausrüstung:** Für die Poliertests wurde ein P200 CMP Clustertool von Peter Wolters CMP Systeme, ausgestattet mit einer PM200 Poliermaschine und einem Bürstenreiniger der Firma Contrade, verwendet. Reinigungsversuche erfolgten mit Wasser bzw. mit Ammoniak.

Der Polierkopf war mit einem DF200 Backingfilm von Rodel bestückt, als Poliertuch wurde ein IC1000/SubaIV Pad, ebenfalls von Rodel eingesetzt. Für den Polierprozess wurde der in Tabelle 4 aufgeführte Parametersatz verwendet.

**Tabelle 4:**

| **Parametersatz des Polierprozesses**^{**1)**} | |
|---|---|
| Kraft | 1500 N |
| Aufsetzpunkt ²⁾ | 190 mm |
| Rückseitendruck innen ³⁾ | 0 kPa |
| Rückseitendruck außen ³⁾ | 10 kPa |
| Oszillation | - 10 mm |
| Chuckgeschwindigkeit | 20 U/min |
| Poliertellergeschwindigkeit | 33 U/min |
| Dispersionsfluß | 180 ml/min |
| Polierzeit | 60 sec |

| | |
|---|---|
| 1)Temperatur: ca. 25°C; 2)Angabe in mm Abstand Chuckmitte von Poliertellermitte (Ø Polierteller 600mm); 3) Es wurde ein Zweizonenchuck verwendet, wo zur besseren Einstellung der Uniformity zwei Bereiche getrennt mit Rückseitendruck beaufschlagt werden können; | |

**Wafer:** 200mm Si-Wafer, beschichtet mit 1000nm LPCVD TEOS (670 °C, 750 mTorr).

### Auswertung der Polierergebnisse

**Abtragsleistung und Non-Uniformity:** Die mit den Dispersionen erzielten von Abtragsleistungen und die Non-Uniformity werden durch Messungen der Schichtdicke mit einem Axiospeed Spektralphotometer von Zeiss ermittelt. Es wurden 49-Punkt Messungen auf dem Wafer mit jeweils 6mm Randausschluß durchgeführt. Für die Bestimmung der mittlere Abtragsrate wurden jeweils 25 Wafer poliert und ausgewertet.

Aufgrund eines ausgeprägten Gelierverhaltens auf dem Polierteller konnte mit der Dispersion 2 kein stabiler, auswertbarer Polierprozeß erreicht werden. Es konnten nur 3 Wafer poliert werden, wobei die Abtragsleistung unter der von Dispersion 1 und 3 lagen.

Die Ergebnisse sind in Tabelle 5 dargestellt.

**Tabelle 5:**

| **Polierergebnisse 49 Punkt-Messung**^{**(1)**} | | | | | |
|---|---|---|---|---|---|
| | Disp. 1 | Disp. 3 | Klebosol 30N50 | Klebosol 1501 | SS 25⁽²⁾ |
| Abtrag (nm/min) | 445 | 355 | 287 | 326 | 353 |
| Non-Uniformity⁽³⁾(%) | 5,5 | 6,7 | 5,7 | 6,2 | 5,9 |
| Partikelanzahl nach post-CMP⁽⁴⁾ | 181 | 176 | 171 | 178 | 176 |

| | | | | | |
|---|---|---|---|---|---|
| (1)Randausschluß 6 mm; (2)1:1 verdünnt mit Wasser; (3)Standardabw. 1 Sigma; (4) Partikelgröße 0.25 - 1.00 µm, Brushclean mit 2.0 % Ammoniak; | | | | | |

**Defekte:** Die Untersuchungen bezüglich Defekten (Kratzer und Partikel) erfolgten visuell unter einer Haze-Lampe bzw. mit einem Censor ANS 100 Oberflächenpartikelzähler.

Die Bestimmung der Oberflächenpartikel nach Post-CMP-Reinigung ergibt für alle untersuchten Dispersionen ähnliche Werte (Tabelle 5).

Die mittels wet-jet-mill hergestellte Kalium-dotierte Siliziumdioxid-Dipsersion mit einer mittleren Teilchengröße von kleiner als 100 nm zeigt beim Polieren Vorteile bezüglich Abtragsrate und Non-Uniformity gegenüber den Dispersionen auf Basis von kolloidalem Siliziumdioxid Klebosol 30N50 und 1501, und gegenüber der SS25-Dispersion auf Basis von pyrogenem Siliziumdioxid. Bezüglich der beim Polieren auf der Oberfläche der Wafer hervorgerufenen Defekte verhalten sich die vorgenannten Dispersionen annähernd gleich gut.

## Patentansprüche

1. Wäßrige Dispersion, enthaltend ein mittels Aerosol alkali-dotiertes, pyrogen hergestelltes Siliziumdioxid, **dadurch gekennzeichnet, dass** dieses in der Dispersion einen durchschnittlichen Teilchendurchmesser der Sekundärteilchen von kleiner als 100 nm aufweist und der Quotient dₙ/dₐ aus dem arithmetischen Mittel der Anzahlverteilung dₙ und dem arithmetischen Mittel der Oberflächenverteilung dₐ der Primärteilchen mindestens 0,7 ist.

2. Wäßrige Dispersion nach Anspruch 1, **dadurch gekennzeichnet, daß** der Alkaligehalt des dotierten Siliziumdioxides zwischen 10 ppm und 10 Gew.-% liegt.

3. Wäßrige Dispersion nach den Ansprüchen 1 oder 2, **dadurch gekennzeichnet, daß** die BET-Oberfläche des Alkali-dotierten Siliziumdioxides zwischen 5 und 600 m²/g ist.

4. Wäßrige Dispersion nach den Ansprüchen 1 bis 3, **dadurch gekennzeichnet, daß** der Feststoffgehalt zwischen 0,1 bis 70 Gew.-% liegt.

5. Wäßrige Dispersion nach den Ansprüchen 1 bis 4, **dadurch gekennzeichnet, daß** die Dispersion einen pH-Wert von 8 bis 12 aufweist.

6. Wäßrige Dispersion nach den Ansprüchen 1 bis 5, **dadurch gekennzeichnet, daß** als Alkali-Komponente, Kalium verwendet wird.

7. Verfahren zur Herstellung einer wäßrigen Dispersion nach den Ansprüchen 1 bis 6, **dadurch gekennzeichnet,daß** man das alkali-dotierte, pyrogen hergestellte Siliziumdioxid in wäßriger Lösung mittels hohem Energieeintrag dispergiert.

8. Verfahren zur Herstellung einer wäßrigen Dispersion nach Anspruch 7, **dadurch gekennzeichnet, daß** zur Dispergierung eines Alkali-dotierten Siliziumdioxides in einem wäßrigen Lösungsmittel eine Vorrichtung Verwendung findet, bei der die zu dispergierenden Teilchen unter einem Druck von bis zu 3500 kg/cm² stehen, über eine Düse entspannt werden und miteinander oder gegen Wandbereiche der Vorrichtung kollidieren.

9. Verwendung der wäßrigen Dispersion nach den Ansprüchen 1 bis 6 zum Planarisieren von Halbleitersubstraten oder von auf ihnen aufgebrachten Schichten, zur Erzeugung feinteiliger Oberflächenbeschichtungen im Papierbereich, sowie im Kosmetik- und Glasbereich.

## Claims

1. Aqueous dispersion comprising a silica produced by pyrogenic means and alkali-doped by means of aerosol, **characterised in that** said silica, in the dispersion, has an average particle diameter of the secondary particles of less than 100 nm and the quotient dₙ/dₐ of the arithmetic mean of the number distribution dₙ and the arithmetic mean of the surface distribution dₐ of the primary particles is at least 0.7.

2. Aqueous dispersion according to claim 1, **characterised in that** the alkali content of the doped silica is from 10 ppm to 10 wt.%.

3. Aqueous dispersion according to claims 1 or 2, **characterised in that** the BET surface of the alkali-doped silica is from 5 to 600 m²/g.

4. Aqueous dispersion according to claims 1 to 3, **characterised in that** the solids content is from 0.1 wt.% to 70 wt.%.

5. Aqueous dispersion according to claims 1 to 4, **characterised in that** the dispersion has a pH from 8 to 12.

6. Aqueous dispersion according to claims 1 to 5, **characterised in that** the alkali component used is potassium.

7. A process for the preparation of an aqueous dispersion according to claims 1 to 6, **characterised in that** the alkali-doped silica produced by pyrogenic means is dispersed in aqueous solution by means of a high energy input.

8. A process for the preparation of an aqueous dispersion according to claim 7, **characterised in that**, in order to disperse an alkali-doped silica in an aqueous solvent, a device is used in which the particles to be dispersed are under a pressure of up to 3500 kg/cm² , depressurised by means of a nozzle and collide with one another or against wall regions of the device.

9. The use of the aqueous dispersion according to claims 1 to 6 for planarising semi-conductor substrates or layers applied thereto, for the production of fine-particle surface coatings in the paper sector, and in the cosmetics and glass sector.

## Revendications

1. Dispersion aqueuse, contenant un dioxyde de silicium produit par voie pyrogène et dopé à l'alcali au moyen d'un aérosol,
**caractérisé en ce que**
le dioxyde de silicium présente dans la dispersion un diamètre moyen des particules secondaires inférieur à 100 nm, et le rapport dₙ/dₐ entre la moyenne arithmétique dₙ de la distribution des nombres et la moyenne arithmétique dₐ de la distribution superficielle des particules primaires est d'au moins 0,7.

2. Dispersion aqueuse selon la revendication 1,
**caractérisée en ce que**
la teneur en alcali de l'oxyde de silicium dopé se situe entre 10 ppm et 10 % en poids.

3. Dispersion aqueuse selon les revendications 1 ou 2,
**caractérisée en ce que**
la surface BET du dioxyde de silicium dopé à l'alcali se situe entre 5 et 600 m²/g.

4. Dispersion aqueuse selon les revendications 1 à 3,
**caractérisée en ce que**
la teneur en matière solide se situe entre 0,1 et 70 % en poids.

5. Dispersion aqueuse selon les revendications 1 à 4,
**caractérisée en ce que**
la dispersion présente un pH compris entre 8 et 12.

6. Dispersion aqueuse selon les revendications 1 à 5.
**caractérisée en ce qu'**
on utilise du potassium comme composant d'alcali.

7. Procédé de préparation d'une dispersion aqueuse selon les revendications 1 à 6,
**caractérisé en ce qu'**
on disperse le dioxyde de silicium produit par voie pyrogène et dopé à l'alcali, en solution aqueuse, au moyen d'un apport d'énergie élevé.

8. Procédé de préparation d'une dispersion aqueuse selon la revendication 7,
**caractérisé en ce que**
pour disperser un dioxyde de silicium dopé à l'alcali dans un solvant aqueux, on utilise un dispositif dans lequel les particules à disperser se trouvent sous une pression pouvant aller jusqu'à 3 500 kg/cm², sont détendues par l'intermédiaire d'une tuyère et entrent en collision les unes avec les autres ou avec des zones de paroi de ce dispositif.

9. Utilisation de la dispersion aqueuse selon les revendications 1 à 6 en vue de la planarisation de substrats semi-conducteurs ou de couches mises en place sur ceux-ci, afin de produire des revêtements superficiels à particules fines dans le secteur du papier, ainsi que dans le secteur de la cosmétique et du verre.
